# EUROPÄISCHE PATENTSCHRIFT

(11) **EP 2 722 227 B1**
(45) Veröffentlichungstag und Bekanntmachung des Hinweises auf die Patenterteilung: **01.02.2017**
(21) Anmeldenummer: 13002960.6
(22) Anmeldetag: 08.06.2013
(51) Int. Cl.: B60Q 1/18, B60Q 1/14

(54) **Kraftfahrzeug-Lichtanlage und entsprechendes Betriebsverfahren**
Motor vehicle light installation and corresponding operating method
Installation d'éclairage de véhicule automobile et procédé de fonctionnement correspondant

(30) Priorität: 18.10.2012 DE 102012020428
(43) Veröffentlichungstag der Anmeldung: 23.04.2014
(73) Patentinhaber: MAN Truck & Bus AG, 80995 München (DE)
(72) Erfinder: Kaiser, Stephan, 86343 Königsbrunn (DE); Foscari, Nicola, 80939 München (DE)
(74) Vertreter: v. Bezold & Partner Patentanwälte - PartG mbB

(56) Entgegenhaltungen:
- EP-A1- 1 637 397
- EP-A2- 2 357 398
- DE-A1-102005 000 807
- DE-A1-102011 006 423
- FR-A1- 2 918 323
- US-A1- 2008 055 896

## Beschreibung

Die Erfindung betrifft eine Kraftfahrzeug-Lichtanlage für ein Kraftfahrzeug, insbesondere für ein Nutzfahrzeug, wie beispielsweise einen Lastkraftwagen oder einen Omnibus. Weiterhin betrifft die Erfindung ein entsprechendes Betriebsverfahren.

Moderne Kraftfahrzeug-Lichtanlagen weisen oftmals zusätzlich zu Abblendlicht, Fernlicht, Nebelscheinwerfern und Blinkern ein sogenanntes Tagfahrlicht auf, das bei guten Sichtverhältnissen am Tag eingesetzt wird, um die Erkennbarkeit des Kraftfahrzeugs zu verbessern. Derartige Tagfahrleuchten werden oftmals in LED-Technik als Lichtband ausgeführt, wobei das Lichtband auch zu gestalterischen Zwecken eingesetzt werden kann. Bei einer Integration der Tagfahrleuchte zusammen mit einer Blinkleuchte in ein Scheinwerfermodul kann die Erkennbarkeit der Blinkleuchte jedoch beeinträchtigt werden, wenn die Tagfahrleuchte angeschaltet ist. Dies gilt insbesondere dann, wenn die Blinkleuchte und die Tagfahrleuchte als Lichtband in LED-Technik ausgeführt sind.

Weiterhin ist zum Stand der Technik hinzuweisen auf FR 2 918 323 A1, EP 1 637 397 A1, EP 2 357 398 A2, DE 10 2011 006423 A1 und US 2008/055896 A1. Diese Druckschriften beschreiben Beleuchtungsanlagen von Kraftfahrzeugen, bei denen die Erkennbarkeit der Blinkleuchte verbessert wird, indem die Leuchtkraft des benachbarten Scheinwerfers beeinflusst wird. Auch bei diesen bekannten Beleuchtungsanlagen von Kraftfahrzeugen ist die Erkennbarkeit der Blinkleuchte jedoch noch nicht vollständig befriedigend.

Schließlich offenbart DE 10 2005 000 807 A1 eine Kraftfahrzeug-Lichtanlage gemäß dem Oberbegriff des Anspruchs 1 und ein entsprechendes Betriebsverfahren gemäß dem Oberbegriff des Anspruchs 5. Hierbei wird die Beleuchtungscharakteristik des Scheinwerfers durch eine Änderung der Leuchtkraft verändert, was jedoch nicht optimal ist.

Der Erfindung liegt deshalb die Aufgabe zugrunde, bei einer Kraftfahrzeug-Lichtanlage die Erkennbarkeit der Blinkleuchte bei eingeschaltetem Tagfahrlicht zu verbessern.

Diese Aufgabe wird durch eine erfindungsgemäße Kraftfahrzeug-Lichtanlage bzw. durch ein entsprechendes Betriebsverfahren gemäß den nebengeordneten Ansprüchen gelöst. Die Erfindung umfasst die allgemeine technische Lehre, die Beleuchtungscharakteristik (z.B. Leuchtkraft, Leuchtfläche) der Tagfahrleuchte vorübergehend zu beeinflussen, während die Blinkleuchte eingeschaltet ist, um die Erkennbarkeit der Blinkleuchte zu verbessern.

Die erfindungsgemäße Kraftfahrzeug-Lichtanlage weist mindestens eine Blinkleuchte zur Fahrtrichtungsanzeige und/oder als Warnblinker an einer Fahrzeugfront des Kraftfahrzeugs auf. In der Regel umfasst die erfindungsgemäße Kraftfahrzeug-Lichtanlage mindestens vier Blinkleuchten, die jeweils paarweise an der Fahrzeugfront und am Fahrzeugheck jeweils auf der linken bzw. rechten Seite des Kraftfahrzeugs angeordnet sind. Die Erfindung beansprucht jedoch auch Schutz für eine Komponente einer derartigen Kraftfahrzeug-Lichtanlage mit nur einer einzigen Blinkleuchte, die erfindungsgemäß angesteuert wird.

Darüber hinaus umfasst die erfindungsgemäße Kraftfahrzeug-Lichtanlage mindestens einen Scheinwerfer (z.B. Tagfahrleuchte) zur Lichtabgabe mit einer bestimmten Beleuchtungscharakteristik an der Fahrzeugfront des Kraftfahrzeugs, insbesondere mit einer bestimmten Leuchtkraft und einer bestimmten Leuchtfläche. Bei diesem Scheinwerfer, der erfindungsgemäß angesteuert wird, handelt es sich vorzugsweise um eine Tagfahrleuchte, jedoch kann das erfindungsgemäße Prinzip auch auf andere Typen von Scheinwerfern angewendet werden, wie beispielsweise Nebelscheinwerfer, Fernlicht oder Abblendlicht, wobei jedoch die gesetzlichen Bestimmungen hinsichtlich der Leuchtkraft der jeweiligen Scheinwerfer aus Sicherheitsgründen beachtet werden müssen.

Darüber hinaus umfasst die erfindungsgemäße Kraftfahrzeug-Lichtanlage in herkömmlicher Weise mindestens einen Schalter zum Einschalten bzw. Ausschalten der Blinkleuchte.

Ferner weist die erfindungsgemäße Kraftfahrzeug-Lichtanlage eine Steuereinheit auf, die den Scheinwerfer (z.B. Tagfahrlicht) ansteuert, was an sich aus dem Stand der Technik bekannt ist.

Die Erfindung sieht nun zusätzlich vor, dass die Steuereinheit die Beleuchtungscharakteristik des Scheinwerfers vorübergehend beeinflusst, während die Blinkleuchte eingeschaltet ist, um die Erkennbarkeit der Blinkleuchte zu verbessern. Die Steuereinheit erfasst also vorzugsweise den Schaltzustand des Schalters zum Einschalten bzw. Ausschalten der Blinkleuchte und schaltet dann die jeweilige Blinkleuchte an bzw. aus. Darüber hinaus beeinflusst die Steuereinheit dann im eingeschalteten Zustand der Blinkleuchte die Beleuchtungscharakteristik des benachbarten Scheinwerfers so, dass die Erkennbarkeit der Blinkleuchte verbessert wird.

Gemäß der Erfindung wird die Beleuchtungscharakteristik des Scheinwerfers (z.B. Tagfahrleuchte) im eingeschalteten Zustand der Blinkleuchte dadurch beeinflusst, dass die Leuchtkraft des Scheinwerfers (z.B. Tagfahrleuchte) verringert wird. Bei einem Einschalten einer Blinkleuchte wird die benachbarte Tagfahrleuchte also quasi herunter gedimmt, damit die Blinkleuchte besser erkennbar ist.

Gemäß der Erfindung wird die Beleuchtungscharakteristik des Scheinwerfers im eingeschalteten Zustand der Blinkleuchte dadurch beeinflusst, dass die Leuchtfläche des benachbarten Scheinwerfers (z.B. Tagfahrlicht) räumlich verlagert wird, und zwar weg von der Blinkleuchte. Beispielsweise kann die Tagfahrleuchte eine segmentierte Leuchtfläche aufweisen, die aus mehreren einzeln ansteuerbaren Leuchtelementen besteht. Im eingeschalteten Zustand einer Blinkleuchte können dann diejenigen Leuchtsegmente des Scheinwerfers abgeschaltet werden, die in unmittelbarer Nähe der Blinkleuchte angeordnet sind, während die weiter entfernten Leuchtsegmente des Scheinwerfers angeschaltet bleiben. Zur Aufrechterhaltung einer ausreichenden Leuchtkraft des Scheinwerfers (z.B. Tagfahrleuchte) können im eingeschalteten Zustand der Blinkleuchte weitere Leuchtsegmente des Scheinwerfers zugeschaltet werden, die sich weiter entfernt von der Blinkleuchte befinden und die Erkennbarkeit der Blinkleuchte deshalb nicht beeinträchtigen.

Die beiden vorstehend genannten Varianten der Erfindung (Herabsetzung der Leuchtkraft, Verlagerung der Leuchtfläche) können im Rahmen der Erfindung auch in Kombination miteinander eingesetzt werden.

Die Erfindung sieht vor, dass die Beleuchtungscharakteristik des Scheinwerfers im eingeschalteten Zustand der Blinkleuchte periodisch beeinflusst wird. Beispielsweise kann die Leuchtkraft des benachbarten Scheinwerfers (z.B. Tagfahrleuchte) im eingeschalteten Zustand der Blinkleuchte periodisch verändert werden. Die Änderungsfrequenz der Leuchtkraft des Scheinwerfers entspricht hierbei der Blinkfrequenz der Blinkleuchte. Darüber hinaus ist vorgesehen, dass die Beleuchtungscharakteristik des Scheinwerfers (z.B. Tagfahrleuchte) im Gegentakt zu der Blinkfrequenz der Blinkleuchte verändert wird. Es wurde bereits eingangs kurz erwähnt, dass die erfindungsgemäße Kraftfahrzeug-Lichtanlage vorzugsweise Blinkleuchten und Tagfahrleuchten an beiden Fahrzeugseiten aufweist, d.h. an der linken Fahrzeugseite und an der rechten Fahrzeugseite. Bei einem Einschalten einer Blinkleuchte auf einer einzigen Fahrzeugseite besteht im Rahmen der Erfindung die Möglichkeit, dass die Beleuchtungscharakteristik der Scheinwerfer (z.B. Tagfahrlicht) an beiden Fahrzeugseiten beeinflusst wird, d.h. auch an der Fahrzeugseite, an der die Blinkleuchte nicht eingeschaltet ist. Alternativ besteht die Möglichkeit, dass die Beleuchtungscharakteristik nur bei dem Scheinwerfer auf der Fahrzeugseite beeinflusst wird, an der die Blinkleuchte eingeschaltet ist. Bei einer Betätigung als Warnblinker an beiden Fahrzeugseiten wird die Beleuchtungscharakteristik der Scheinwerfer (z.B. Tagfahrleuchte) dagegen vorzugsweise an beiden Fahrzeugseiten beeinflusst, um die Erkennbarkeit der Blinkleuchte zu verbessern.

Ferner ist zu erwähnen, dass es sich bei dem Scheinwerfer vorzugsweise um ein Tagfahrlicht handelt, das beispielsweise als LED-Tagfahrlicht ausgebildet ist. Es wurde jedoch bereits vorstehend darauf hingewiesen, dass sich das erfindungsgemäße Prinzip auch auf andere Scheinwerfertypen anwenden lässt, wie beispielsweise Abblendlicht, Fernlicht, Nebelscheinwerfer. Darüber hinaus ist zu erwähnen, dass das erfindungsgemäße Prinzip besonders dann vorteilhaft ist, wenn die Blinkleuchte und der Scheinwerfer (z.B. Tagfahrlicht) in einem gemeinsamen Scheinwerfermodul integriert sind, da sich die Blinkleuchte dann in unmittelbarer Nachbarschaft zu dem Scheinwerfer befindet, wodurch die Erkennbarkeit der Blinkleuchte bei eingeschaltetem Scheinwerfer beeinträchtigt werden könnte.

Darüber hinaus ist zu erwähnen, dass die Erfindung nicht nur Schutz beansprucht für die vorstehend beschriebene erfindungsgemäße Kraftfahrzeug-Lichtanlage. Vielmehr beansprucht die Erfindung auch Schutz für ein ganzes Kraftfahrzeug mit einer derartigen Kraftfahrzeug-Lichtanlage. Bei diesem Kraftfahrzeug kann es sich beispielsweise um ein Nutzfahrzeug handeln, wie beispielsweise einen Lastkraftwagen oder einen Omnibus.

Schließlich ist noch zu erwähnen, dass die Erfindung auch ein entsprechendes Betriebsverfahren für eine Kraftfahrzeug-Lichtanlage umfasst, wie sich bereits aus der vorstehenden Beschreibung ergibt, so dass auf eine weitere Beschreibung des Betriebsverfahrens verzichtet werden kann.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
Figur 1 eine schematische Darstellung einer erfindungsgemäßen Kraftfahrzeug-Lichtanlage,
Figur 2A eine Frontansicht eines nicht erfindungsgemäßen Scheinwerfermoduls an einer Frontseite eines Kraftfahrzeugs auf der rechten Seite, wobei die Blinkleuchte ausgeschaltet ist,
Figur 2B eine Abwandlung von Figur 2A, wobei die Blinkleuchte eingeschaltet ist,
Figur 3A eine Abwandlung von Figur 2A, wobei das Tagfahrlicht mehrere Leuchtsegmente aufweist, die separat schaltbar sind,
Figur 3B das Scheinwerfermodul gemäß Figur 3A, wobei der Blinker angeschaltet ist,
Figur 4 ein Flussdiagramm zur Verdeutlichung des nicht erfindungsgemäßen Betriebsverfahrens, wobei das Tagfahrlicht bei eingeschaltetem Blinker beidseitig herunter gedimmt wird,
Figur 5 ein Flussdiagramm zur Verdeutlichung des nicht erfindungsgemäßen Betriebsverfahrens, wobei das Tagfahrlicht nur auf der Seite herunter gedimmt wird, an der eine Blinkleuchte eingeschaltet ist, sowie
Figur 6 ein Flussdiagramm zur Verdeutlichung des nicht erfindungsgemäßen Betriebsverfahrens beim Einschalten eines Warnblinkers.

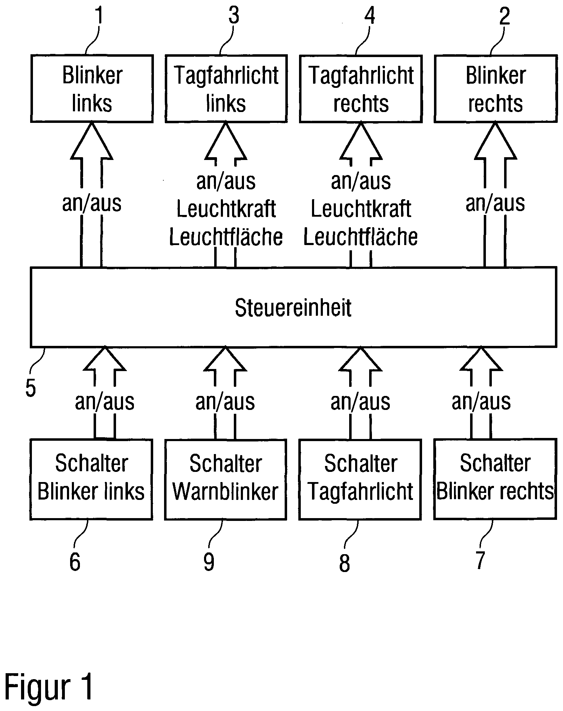

Figur 1 zeigt in schematischer, vereinfachter Form eine erfindungsgemäße Kraftfahrzeug-Lichtanlage für ein Kraftfahrzeug, wie beispielsweise ein Nutzfahrzeug (z.B. Lastkraftwagen, Omnibus).

Zur Vereinfachung sind hierbei nur Leuchten an der Frontseite des Kraftfahrzeugs dargestellt. Die erfindungsgemäße Kraftfahrzeug-Lichtanlage umfasst jedoch auch Leuchten am Fahrzeugheck, die jedoch im Rahmen der Erfindung nicht von Bedeutung sind und deshalb auch nicht dargestellt sind.

An der Fahrzeugfront weist die erfindungsgemäße Kraftfahrzeug-Lichtanlage eine Blinkleuchte 1 auf der linken Seite und eine Blinkleuchte 2 auf der rechten Fahrzeugseite auf. Darüber hinaus weist die erfindungsgemäße Kraftfahrzeug-Lichtanlage eine Tagfahrleuchte 3 auf der linken Fahrzeugseite und eine Tagfahrleuchte 4 auf der rechten Fahrzeugseite auf. Die Blinkleuchte 1 und die Tagfahrleuchte 3 auf der linken Fahrzeugseite sind hierbei zusammen mit einem Abblendlicht und einem Fernlicht in einem gemeinsamen Scheinwerfermodul integriert. Entsprechend sind auch die Blinkleuchte 2 auf der rechten Fahrzeugseite und die Tagfahrleuchte 4 auf der rechten Fahrzeugseite in einem gemeinsamen Scheinwerfermodul integriert.

Darüber hinaus umfasst die erfindungsgemäße Kraftfahrzeug-Lichtanlage 1 eine Steuereinheit 5, welche die Blinkleuchten 1, 2 und die Tagfahrleuchten 3, 4 einschaltet bzw. ausschaltet. Darüber hinaus steuert die Steuereinheit 5 auch die Leuchtkraft und/oder die Leuchtfläche der Tagfahrleuchten 3, 4, um die Erkennbarkeit der Blinkleuchten 1, 2 zu verbessern, wenn das Tagfahrlicht eingeschaltet ist.

Ferner umfasst die erfindungsgemäße Kraftfahrzeug-Lichtanlage einen Schalter 6 zur Betätigung der linken Blinkleuchte 1 und einen Schalter 7 zur Betätigung der rechten Blinkleuchte 2.

Darüber hinaus umfasst die erfindungsgemäße Kraftfahrzeug-Lichtanlage einen Schalter 8 zum Einschalten bzw. Ausschalten des Tagfahrlichts sowie einen Schalter 9 zum Einschalten bzw. Ausschalten einer Warnblinkfunktion.

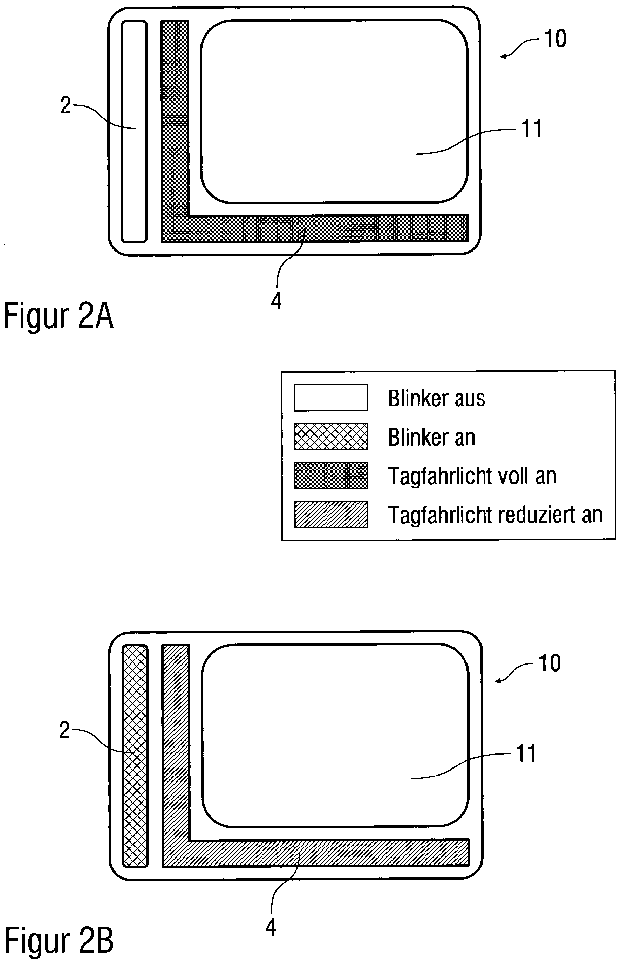

Im Folgenden wird nun anhand der Figuren 2A und 2B die Betriebsweise der Kraftfahrzeug-Lichtanlage gemäß Figur 1 erläutert. So zeigen die Figuren 2A und 2B jeweils eine Frontansicht eines Scheinwerfermoduls 10, das an der Fahrzeugfront vorne rechts montiert ist. Das Scheinwerfermodul 10 enthält die Blinkleuchte 2, die Tagfahrleuchte 4 sowie einen Scheinwerfer 11 mit Abblendlicht und Fernlicht.

Figur 2A zeigt hierbei den Betrieb des Scheinwerfermoduls 10, wenn die Tagfahrleuchte 4 eingeschaltet ist, während die Blinkleuchte 2 ausgeschaltet ist. In diesem Zustand bei der ausgeschalteten Blinkleuchte 2 ist die Erkennbarkeit der Blinkleuchte 2 irrelevant, so dass die Tagfahrleuchte 4 mit voller Leuchtkraft angeschaltet ist.

Figur 2B zeigt dagegen den Betrieb des Scheinwerfermoduls 10, wenn die Tagfahrleuchte 4 und die Blinkleuchte 2 eingeschaltet sind. In diesem Betriebszustand besteht die Gefahr, dass die Erkennbarkeit der Blinkleuchte 2 durch die eingeschaltete Tagfahrleuchte 4 beeinträchtigt wird. In diesem Betriebszustand bei der eingeschalteten Blinkleuchte 2 steuert die Steuereinheit 5 deshalb die Leuchtkraft der kompletten Tagfahrleuchte 4 herunter, um die Erkennbarkeit der eingeschalteten Blinkleuchte 2 zu verbessern.

Hierbei ist zu erwähnen, dass die Leuchtkraft der Tagfahrleuchte auf der gesamten Leuchtfläche der Tagfahrleuchte 4 herabgesetzt wird und zwar dauerhaft, solange die Blinkleuchte 2 eingeschaltet ist.

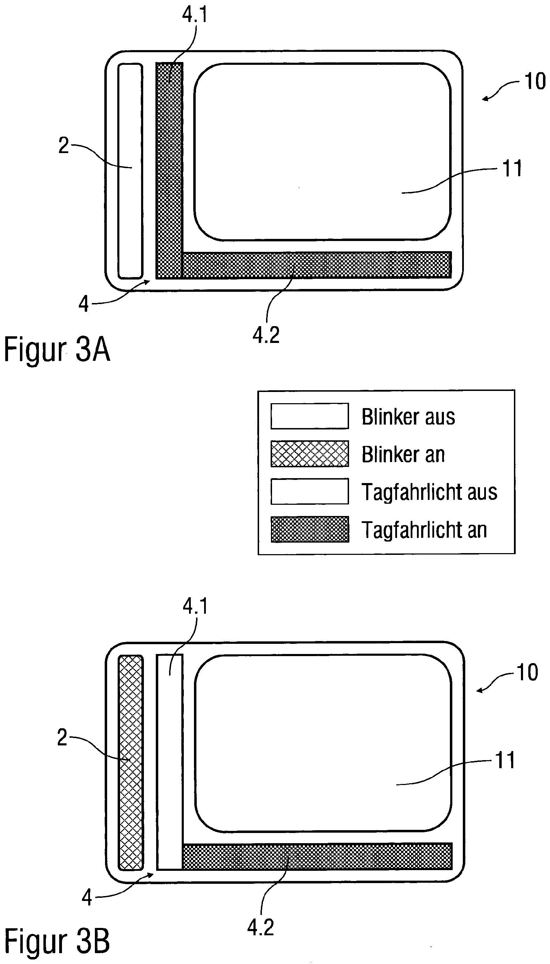

Die Figuren 3A und 3B zeigen eine Abwandlung der Figuren 2A und 2B, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht zunächst darin, dass die Tagfahrleuchte 4 zwei separat steuerbare Leuchtsegmente 4.1, 4.2 aufweist, wobei sich das Leuchtsegment 4.1 direkt neben der Blinkleuchte 2 befindet, während sich das Leuchtsegment 4.2 der Tagfahrleuchte 4 unterhalb des Scheinwerfers 11 befindet. Das Leuchtsegment 4.1 der Tagfahrleuchte 4 kann also wegen seiner unmittelbaren Nähe zu der Blinkleuchte 2 die Erkennbarkeit der Blinkleuchte 2 beeinträchtigen, wohingegen das Leuchtsegment 4.2 der Tagfahrleuchte 4 weiter entfernt von der Blinkleuchte 2 angeordnet ist und die Erkennbarkeit der Blinkleuchte 2 deshalb kaum beeinträchtigen kann.

Im ausgeschalteten Zustand der Blinkleuchte 2 gemäß Figur 3A werden beide Leuchtsegmente 4.1, 4.2 der Tagfahrleuchte 4 von der Steuereinheit 5 auf volle Leuchtkraft geschaltet.

In dem eingeschalteten Zustand der Blinkleuchte 2 gemäß Figur 3B wird dagegen nur das Leuchtsegment 4.2 der Tagfahrleuchte 4 angeschaltet, während das Leuchtsegment 4.1 der Tagfahrleuchte 4 ausgeschaltet bleibt, solange die benachbarte Blinkleuchte 2 angeschaltet ist. Auf diese Weise wird verhindert, dass die Erkennbarkeit der Blinkleuchte 2 durch das Leuchtsegment 4.1 der Tagfahrleuchte 4 beeinträchtigt wird. Das Leuchtsegment 4.1 der Tagfahrleuchte 4 wird dann wieder angeschaltet, sobald die Blinkleuchte 2 abgeschaltet ist.

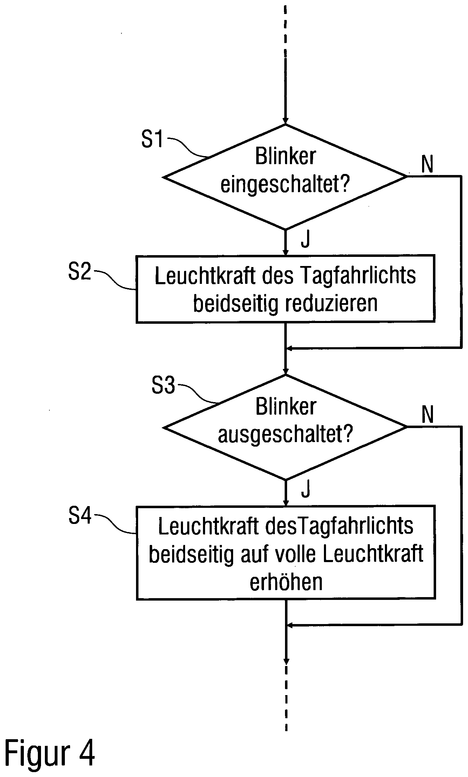

Figur 4 zeigt ein Flussdiagramm zur Verdeutlichung des Betriebsverfahrens der Steuereinheit 5 aus Figur 1.

Bei eingeschaltetem Tagfahrlicht wird in einem Schritt S1 laufend überprüft, ob irgendeine der Blinkleuchten 1, 2 eingeschaltet ist.

Falls dies der Fall ist, so wird in einem Schritt S2 die Leuchtkraft der Tagfahrleuchten 3, 4 auf beiden Fahrzeugseiten reduziert, um die Erkennbarkeit der Blinkleuchten 1, 2 zu verbessern.

In einem Schritt S3 wird dann überprüft, ob die Blinkleuchten 1, 2 wieder ausgeschaltet sind.

Falls dies der Fall ist, so wird die Leuchtkraft der beiden Tagfahrleuchten 3, 4 in einem Schritt S4 wieder auf ihre volle Leuchtkraft angehoben.

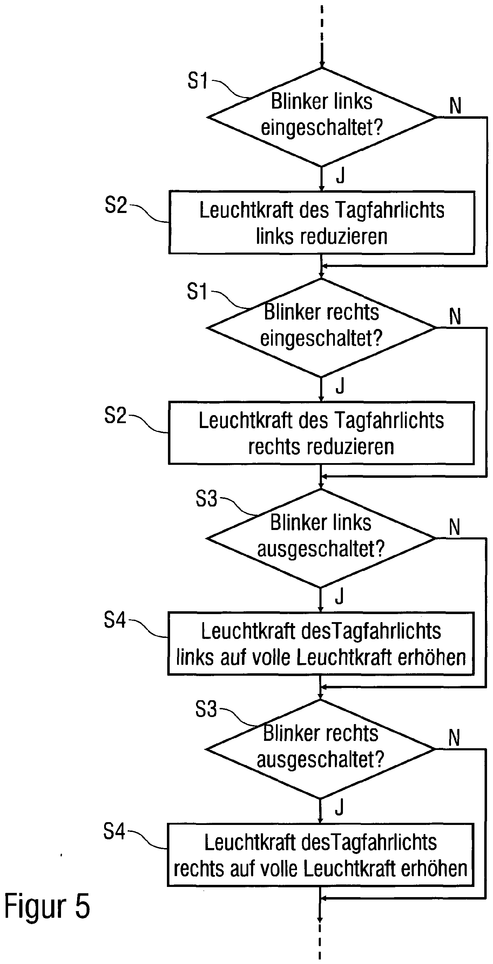

Figur 5 zeigt eine Abwandlung des Flussdiagramms gemäß Figur 4, so dass zur Vermeidung von Wiederholungen auf die vorstehende Beschreibung verwiesen wird.

Diese Abwandlung des Betriebsverfahrens zeichnet sich dadurch aus, dass die Leuchtkraft der Tagfahrleuchten 3, 4 nur auf derjenigen Fahrzeugseite herabgesetzt wird, an der auch die zugehörige Blinkleuchte 1 bzw. 2 angeschaltet ist. Auf der gegenüberliegenden Fahrzeugseite wird die Tagfahrleuchte 3 bzw. 4 dagegen dann mit voller Leuchtkraft betrieben.

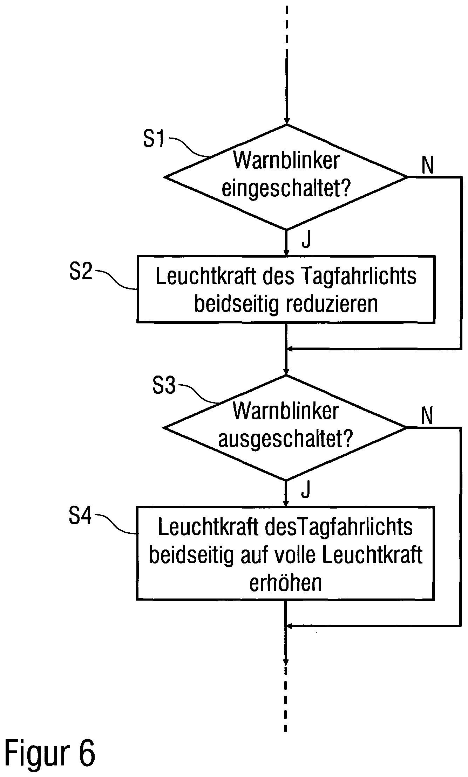

Schließlich zeigt Figur 6 das Betriebsverfahren beim Einschalten eines Warnblinkers, wenn die beiden Blinkleuchten 1, 2 gemeinsam betrieben werden.

Hierzu wird in einem Schritt S1 laufend geprüft, ob die Warnblinkfunktion eingeschaltet ist.

Falls dies der Fall ist, so wird die Leuchtkraft der beiden Tagfahrleuchten 3, 4 auf beiden Fahrzeugseiten dann in einem Schritt S2 reduziert.

In einem Schritt S3 wird dann laufend überprüft, ob die Warnblinkfunktion wieder ausgeschaltet ist.

Falls dies der Fall ist, so wird die Leuchtkraft der beiden Tagfahrleuchten 3, 4 auf beiden Fahrzeugseiten in einem Schritt S4 wieder auf ihre volle Leuchtkraft erhöht.

### Bezugszeichenliste:

- 1: Blinkleuchte vorne links
- 2: Blinkleuchte vorne rechts
- 3: Tagfahrleuchte vorne links
- 4: Tagfahrleuchte vorne rechts
- 4.1: Leuchtsegment der Tagfahrleuchte 4
- 4.2: Leuchtsegment der Tagfahrleuchte 4
- 5: Steuereinheit
- 6: Schalter für Blinkleuchte links
- 7: Schalter für Blinkleuchte rechts
- 8: Schalter Tagfahrlicht
- 9: Schalter Warnblinker
- 10: Scheinwerfermodul
- 11: Scheinwerfer

## Patentansprüche

1. Kraftfahrzeug-Lichtanlage für ein Kraftfahrzeug, insbesondere für ein Nutzfahrzeug, mit
a) mindestens einer Blinkleuchte (1, 2) zur Fahrtrichtungsanzeige und/oder als Warnblinker an einer Fahrzeugfront des Kraftfahrzeugs,
b) mindestens einem Scheinwerfer (3, 4), insbesondere als Tagfahrleuchte, zur Lichtabgabe mit einer bestimmten Beleuchtungscharakteristik an der Fahrzeugfront des Kraftfahrzeugs, insbesondere mit einer bestimmten Leuchtkraft und einer bestimmten Leuchtfläche,
c) einem Schalter (6, 7) zum Einschalten oder Ausschalten der Blinkleuchte (1, 2) und
d) einer Steuereinheit (5) zum Ansteuern des Scheinwerfers (3, 4),
e) wobei die Steuereinheit (5) die Beleuchtungscharakteristik des Scheinwerfers (3, 4) vorübergehend beeinflusst, während die Blinkleuchte (1, 2) eingeschaltet ist, um die Erkennbarkeit der Blinkleuchte (1, 2) zu verbessern, und
f) die Steuereinheit (5) die Beleuchtungscharakteristik des Scheinwerfers (3, 4) im eingeschalteten Zustand der Blinkleuchte (1, 2) periodisch mit der Blinkfrequenz der Blinkleuchte (1, 2) im Gegentakt oder im Gleichtakt der Blinkleuchte (1, 2) beeinflusst,
**dadurch gekennzeichnet**,
g) dass die Steuereinheit (5) die Beleuchtungscharakteristik des Scheinwerfers (3, 4) im eingeschalteten Zustand der Blinkleuchte (1, 2) dadurch beeinflusst,
g1) dass die Leuchtfläche des Scheinwerfers (3, 4) räumlich verlagert wird und zwar weg von der Blinkleuchte (1, 2) solange die Blinkleuchte (1, 2) eingeschaltet ist, und/oder
g2) dass die Leuchtkraft des Scheinwerfers (3, 4) verringert wird solange die Blinkleuchte (1, 2) eingeschaltet ist.

2. Kraftfahrzeug-Lichtanlage nach Anspruch 1,
**dadurch gekennzeichnet,**
a) **dass** für die Fahrzeugfront des Kraftfahrzeugs für die linke Fahrzeugseite und für die rechte Fahrzeugseite jeweils mindestens eine Blinkleuchte (1, 2) vorgesehen ist, und
b) **dass** für die Fahrzeugfront des Kraftfahrzeugs für die linke Fahrzeugseite und für die rechte Fahrzeugseite jeweils mindestens ein Scheinwerfer (3, 4), insbesondere mindestens eine Tagfahrleuchte, vorgesehen ist,
c) **dass** die Steuereinheit (5) bei einem Einschalten der Blinkleuchte (1, 2) an einer Fahrzeugseite die Beleuchtungscharakteristik der Scheinwerfer (3, 4) an beiden Fahrzeugseiten beeinflusst, um die Erkennbarkeit der Blinkleuchte (1, 2) zu verbessern, oder
d) **dass** die Steuereinheit (5) bei einem Einschalten der Blinkleuchte (1, 2) an einer Fahrzeugseite die Beleuchtungscharakteristik des Scheinwerfers (3, 4) nur an derselben Fahrzeugseite beeinflusst, um die Erkennbarkeit der Blinkleuchte (1, 2) zu verbessern, und/oder
e) **dass** die Steuereinheit (5) bei einem Einschalten der Blinkleuchten (1, 2) als Warnblinker an beiden Fahrzeugseiten die Beleuchtungscharakteristik der Scheinwerfer (3, 4) beidseitig an beiden Fahrzeugseiten beeinflusst, um die Erkennbarkeit der Blinkleuchte (1, 2) zu verbessern.

3. Kraftfahrzeug-Lichtanlage nach einem der vorhergehenden Ansprüche,
**dadurch gekennzeichnet,**
a) **dass** der Scheinwerfer (3, 4) ein Tagfahrlicht ist, insbesondere ein LED-Fahrlicht, und/oder
b) **dass** die Blinkleuchte (1, 2) und der Scheinwerfer (3, 4) gemeinsam in einem Scheinwerfermodul (10) integriert sind.

4. Kraftfahrzeug, insbesondere Nutzfahrzeug, insbesondere Lastkraftwagen oder Omnibus, mit einer Kraftfahrzeug-Lichtanlage nach einem der vorhergehenden Ansprüche.

5. Betriebsverfahren für eine Kraftfahrzeug-Lichtanlage mit mindestens einer Blinkleuchte (1, 2) zur Fahrtrichtungsanzeige und/oder als Warnblinker an einer Fahrzeugfront des Kraftfahrzeugs, sowie mit mindestens einem Scheinwerfer (3, 4), insbesondere als Tagfahrleuchte, zur Lichtabgabe mit einer bestimmten Beleuchtungscharakteristik an der Fahrzeugfront des Kraftfahrzeugs, insbesondere mit einer bestimmten Leuchtkraft und einer bestimmten Leuchtfläche, wobei das Betriebsverfahren die folgenden Schritte aufweist:
a) Ermitteln des Schaltzustands der Blinkleuchte (1, 2),
b) Beeinflussung der Beleuchtungscharakteristik des Scheinwerfers (3, 4), während die Blinkleuchte (1, 2) eingeschaltet ist, um die Erkennbarkeit der Blinkleuchte (1, 2) zu verbessern,
c) wobei die Beleuchtungscharakteristik des Scheinwerfers (3, 4) im eingeschalteten Zustand der Blinkleuchte (1, 2) periodisch mit der Blinkfrequenz der Blinkleuchte (1, 2) im Gegentakt oder im Gleichtakt der Blinkleuchte (1, 2) beeinflusst wird,
**dadurch gekennzeichnet**,
d) dass die Beleuchtungscharakteristik des Scheinwerfers (3, 4) im eingeschalteten Zustand der Blinkleuchte (1, 2) dadurch beeinflusst wird,
d1) dass die Leuchtfläche des Scheinwerfers (3, 4) räumlich verlagert wird und zwar weg von der Blinkleuchte (1, 2) solange die Blinkleuchte (1, 2) eingeschaltet ist, und/oder
d2) dass die Leuchtkraft des Scheinwerfers (3, 4) verringert wird solange die Blinkleuchte (1, 2) eingeschaltet ist.

6. Betriebsverfahren nach Anspruch 5,
**dadurch gekennzeichnet,**
a) **dass** für die Fahrzeugfront des Kraftfahrzeugs für die linke Fahrzeugseite und für die rechte Fahrzeugseite jeweils mindestens eine Blinkleuchte (1, 2) vorgesehen ist, und
b) **dass** für die Fahrzeugfront des Kraftfahrzeugs für die linke Fahrzeugseite und für die rechte Fahrzeugseite jeweils mindestens ein Scheinwerfer (3, 4), insbesondere eine Tagfahrleuchte, vorgesehen ist,
c) **dass** bei einem Einschalten der Blinkleuchte (1, 2) an einer Fahrzeugseite die Beleuchtungscharakteristik der Scheinwerfer (3, 4) an beiden Fahrzeugseiten beeinflusst wird, um die Erkennbarkeit der Blinkleuchte (1, 2) zu verbessern, oder
d) **dass** bei einem Einschalten der Blinkleuchte (1, 2) an einer Fahrzeugseite die Beleuchtungscharakteristik der Scheinwerfers (3, 4) nur an derselben Fahrzeugseite beeinflusst wird, um die Erkennbarkeit der Blinkleuchte (1, 2) zu verbessern, und/oder
e) **dass** bei einem Einschalten der Blinkleuchte (1, 2) an beiden Fahrzeugseiten die Beleuchtungscharakteristik der Scheinwerfer (3, 4) beidseitig an beiden Fahrzeugseiten beeinflusst wird, um die Erkennbarkeit der Blinkleuchte (1, 2) zu verbessern.

## Claims

1. Motor vehicle light installation for a motor vehicle, in particular for a commercial vehicle, comprising
a) at least one flashing luminaire (1, 2) for indicating the direction of travel and/or as hazard warning lights at a vehicle front of the motor vehicle,
b) at least one headlight (3, 4), in particular as daytime running luminaire, for emitting light with a specific lighting characteristic at the vehicle front of the motor vehicle, in particular with a specific luminosity and a specific luminous area,
c) a switch (6, 7) for switching on or switching off the flashing luminaire (1, 2), and
d) a control unit (5) for driving the headlight (3, 4),
e) wherein the control unit (5) temporarily influences the lighting characteristic of the headlight (3, 4) while the flashing luminaire (1, 2) is switched on, in order to improve the identifiability of the flashing luminaire (1, 2), and
f) the control unit (5) influences the lighting characteristic of the headlight (3, 4) in the switched-on state of the flashing luminaire (1, 2) periodically with the flashing frequency of the flashing luminaire (1, 2) with differential pulse or common pulse with respect to the flashing luminaire (1, 2),
characterized
g) in that the control unit (5) influences the lighting characteristic of the headlight (3, 4) in the switched-on state of the flashing luminaire (1, 2) by
g1) the luminous area of the headlight (3, 4) being spatially displaced, specifically away from the flashing luminaire (1, 2), as long as the flashing luminaire (1, 2) is switched on, and/or
g2) the luminosity of the headlight (3, 4) being reduced as long as the flashing luminaire (1, 2) is switched on.

2. Motor vehicle light installation according to Claim 1,
**characterized**
a) **in that** in each case at least one flashing luminaire (1, 2) is provided for the left side of the vehicle and for the right side of the vehicle for the vehicle front of the motor vehicle, and
b) **in that** in each case at least one headlight (3, 4), in particular at least one daytime running luminaire, is provided for the left side of the vehicle and for the right side of the vehicle for the vehicle front of the motor vehicle,
c) **in that** the control unit (5), in the case of a switching on of the flashing luminaire (1, 2) on one side of the vehicle, influences the lighting characteristic of the headlights (3, 4) on both sides of the vehicle, in order to improve the identifiability of the flashing luminaire (1, 2), or
d) **in that** the control unit (5), in the case of a switching on of the flashing luminaire (1, 2) on one side of the vehicle, influences the lighting characteristic of the headlight (3, 4) only on the same side of the vehicle, in order to improve the identifiability of the flashing luminaire (1, 2), and/or
e) **in that** the control unit (5) in the case of a switching on of the flashing luminaires (1, 2) as hazard warning lights on both sides of the vehicle, influences the lighting characteristic of the headlights (3, 4) at both sides on both sides of the vehicle, in order to improve the identifiability of the flashing luminaire (1, 2).

3. Motor vehicle light installation according to either of the preceding claims,
**characterized**
a) **in that** the headlight (3, 4) is a daytime running light, in particular an LED running light, and/or
b) **in that** the flashing luminaire (1, 2) and the headlight (3, 4) are jointly integrated in a headlight module (10).

4. Motor vehicle, in particular a commercial vehicle, in particular lorry or bus, comprising a motor vehicle light installation according to any of the preceding claims.

5. Operating method for a motor vehicle light installation comprising at least one flashing luminaire (1, 2) for indicating the direction of travel and/or as hazard warning lights at a vehicle front of the motor vehicle, and comprising at least one headlight (3, 4), in particular as daytime running luminaire, for emitting light with a specific lighting characteristic at the vehicle front of the motor vehicle, in particular with a specific luminosity and a specific luminous area, wherein the operating method comprises the following steps:
a) determining the switching state of the flashing luminaire (1, 2),
b) influencing the lighting characteristic of the headlight (3, 4), while the flashing luminaire (1, 2) is switched on, in order to improve the identifiability of the flashing luminaire (1, 2),
c) wherein the lighting characteristic of the headlight (3, 4) is influenced in the switched-on state of the flashing luminaire (1, 2) periodically with the flashing frequency of the flashing luminaire (1, 2) with differential pulse or common pulse with respect to the flashing luminaire (1, 2),
characterized
d) in that the lighting characteristic of the headlight (3, 4) is influenced in the switched-on state of the flashing luminaire (1, 2) by
d1) the luminous area of the headlight (3, 4) being spatially displaced, specifically away from the flashing luminaire (1, 2), as long as the flashing luminaire (1, 2) is switched on, and/or
d2) the luminosity of the headlight (3, 4) being reduced as long as the flashing luminaire (1, 2) is switched on.

6. Operating method according to Claim 5, **characterized**
a) **in that** in each case at least one flashing luminaire (1, 2) is provided for the left side of the vehicle and for the right side of the vehicle for the vehicle front of the motor vehicle, and
b) **in that** in each case at least one headlight (3, 4), in particular at least one daytime running luminaire, is provided for the left side of the vehicle and for the right side of the vehicle for the vehicle front of the motor vehicle,
c) **in that** in the case of a switching on of the flashing luminaire (1, 2) on one side of the vehicle, the lighting characteristic of the headlights (3, 4) on both sides of the vehicle is influenced, in order to improve the identifiability of the flashing luminaire (1, 2), or
d) **in that** in the case of a switching on of the flashing luminaire (1, 2) on one side of the vehicle, the lighting characteristic of the headlight (3, 4) is influenced only on the same side of the vehicle, in order to improve the identifiability of the flashing luminaire (1, 2), and/or
e) **in that** in the case of a switching on of the flashing luminaires (1, 2) on both sides of the vehicle, the lighting characteristic of the headlights (3, 4) is influenced at both sides on both sides of the vehicle, in order to improve the identifiability of the flashing luminaire (1, 2).

## Revendications

1. Installation d'éclairage de véhicule automobile pour un véhicule automobile, notamment pour un véhicule utilitaire, comprenant :
a) au moins un feu clignotant (1, 2) destiné à indiquer le sens de circulation et/ou servant de feu de détresse à un avant de véhicule du véhicule automobile,
b) au moins un feu avant (3, 4), notamment servant de feu de circulation de jour, destiné à délivrer de la lumière ayant une caractéristique d'éclairage donnée à l'avant de véhicule du véhicule automobile, possédant notamment une intensité d'éclairage donnée et une surface éclairante donnée,
c) un commutateur (6, 7) destiné à allumer ou à éteindre le feu clignotant (1, 2) et
d) une unité de commande (5) destinée à commander le feu avant (3, 4)
e) l'unité de commande (5) influençant temporairement la caractéristique d'éclairage du feu avant (3, 4) pendant que le feu clignotant (1, 2) est allumé afin d'améliorer la perceptibilité du feu clignotant (1, 2), et
f) l'unité de commande (5), lorsque le feu clignotant (1, 2) est à l'état allumé, influence périodiquement la caractéristique d'éclairage du feu avant (3, 4) avec la fréquence de clignotement du feu clignotant (1, 2) en opposition de phase ou en phase avec le feu clignotant (1, 2),
caractérisée en ce
g) que l'unité de commande (5) influence la caractéristique d'éclairage du feu avant (3, 4) lorsque le feu clignotant (1, 2) est à l'état allumé en ce
g1) que la surface éclairante du feu avant (3, 4) est décalée dans l'espace, et ce en éloignement du feu clignotant (1, 2) tant que le feu clignotant (1, 2) est allumé, et/ou
g2) que l'intensité d'éclairage du feu avant (3, 4) est réduite tant que le feu clignotant (1, 2) est allumé.

2. Installation d'éclairage de véhicule automobile selon la revendication 1, **caractérisée en ce**
a) **qu'**à l'avant de véhicule du véhicule automobile, au moins un feu clignotant (1, 2) est respectivement prévu pour le côté gauche du véhicule et pour le côté droit du véhicule, et
b) **qu'**à l'avant de véhicule du véhicule automobile, au moins un feu avant (3, 4), notamment au moins un feu de circulation de jour, est respectivement prévu pour le côté gauche du véhicule et pour le côté droit du véhicule,
c) **que** lors d'un allumage du feu clignotant (1, 2) d'un côté du véhicule, l'unité de commande (5) influence la caractéristique d'éclairage du feu avant (3, 4) des deux côtés du véhicule afin d'améliorer la perceptibilité du feu clignotant (1, 2), ou
d) **que** lors d'un allumage du feu clignotant (1, 2) d'un côté du véhicule, l'unité de commande (5) n'influence la caractéristique d'éclairage du feu avant (3, 4) que du même côté du véhicule afin d'améliorer la perceptibilité du feu clignotant (1, 2), et/ou
e) **que** lors d'un allumage du feu clignotant (1, 2) en tant que feu de détresse des deux côtés du véhicule, l'unité de commande (5) influence la caractéristique d'éclairage du feu avant (3, 4) bilatéralement des deux côtés du véhicule afin d'améliorer la perceptibilité du feu clignotant (1, 2).

3. Installation d'éclairage de véhicule automobile selon l'une des revendications précédentes,
**caractérisée en ce**
a) **que** le feu avant (3, 4) est un feu de circulation de jour, notamment un feu de circulation à LED, et/ou
b) **que** le feu clignotant (1, 2) et le feu avant (3, 4) sont intégrés en commun dans un module de phare (10).

4. Véhicule automobile, notamment véhicule utilitaire, plus particulièrement poids-lourd ou autocar, équipé d'une installation d'éclairage de véhicule automobile selon l'une des revendications précédentes.

5. Procédé de fonctionnement pour une installation d'éclairage de véhicule automobile comprenant au moins un feu clignotant (1, 2) destiné à indiquer le sens de circulation et/ou servant de feu de détresse à un avant de véhicule du véhicule automobile, ainsi qu'au moins un feu avant (3, 4), notamment servant de feu de circulation de jour, destiné à délivrer de la lumière ayant une caractéristique d'éclairage donnée à l'avant de véhicule du véhicule automobile, possédant notamment une intensité d'éclairage donnée et une surface éclairante donnée, le procédé de fonctionnement comprenant les étapes suivantes :
a) détermination de l'état de commutation du feu clignotant (1, 2),
b) influence de la caractéristique d'éclairage du feu avant (3, 4) pendant que le feu clignotant (1, 2) est allumé afin d'améliorer la perceptibilité du feu clignotant (1, 2),
c) la caractéristique d'éclairage du feu avant (3, 4), lorsque le feu clignotant (1, 2) est à l'état allumé, étant influencée périodiquement avec la fréquence de clignotement du feu clignotant (1, 2) en opposition de phase ou en phase avec le feu clignotant (1, 2),
caractérisé en ce
d) que la caractéristique d'éclairage du feu avant (3, 4) lorsque le feu clignotant (1, 2) est à l'état allumé, est influencée en ce
d1) que la surface éclairante du feu avant (3, 4) est décalée dans l'espace, et ce en éloignement du feu clignotant (1, 2) tant que le feu clignotant (1, 2) est allumé, et/ou
d2) que l'intensité d'éclairage du feu avant (3, 4) est réduite tant que le feu clignotant (1, 2) est allumé.

6. Procédé de fonctionnement selon la revendication 5, **caractérisé en ce**
a) **qu'**à l'avant de véhicule du véhicule automobile, au moins un feu clignotant (1, 2) est respectivement prévu pour le côté gauche du véhicule et pour le côté droit du véhicule, et
b) **qu'**à l'avant de véhicule du véhicule automobile, au moins un feu avant (3, 4), notamment au moins un feu de circulation de jour, est respectivement prévu pour le côté gauche du véhicule et pour le côté droit du véhicule,
c) **que** lors d'un allumage du feu clignotant (1, 2) d'un côté du véhicule, la caractéristique d'éclairage du feu avant (3, 4) est influencée des deux côtés du véhicule afin d'améliorer la perceptibilité du feu clignotant (1, 2), ou
d) **que** lors d'un allumage du feu clignotant (1, 2) d'un côté du véhicule, la caractéristique d'éclairage du feu avant (3, 4) n'est influencée que du même côté du véhicule afin d'améliorer la perceptibilité du feu clignotant (1, 2), et/ou
e) **que** lors d'un allumage du feu clignotant (1, 2) des deux côtés du véhicule, la caractéristique d'éclairage du feu avant (3, 4) est influencée bilatéralement des deux côtés du véhicule afin d'améliorer la perceptibilité du feu clignotant (1, 2).
